# EUROPÄISCHE PATENTANMELDUNG

(11) **EP 4 019 369 A1**
(43) Veröffentlichungstag der Anmeldung: **29.06.2022**
(21) Anmeldenummer: 21216950.2
(22) Anmeldetag: 22.12.2021
(51) Int. Cl.: B61L 23/04, B65G 43/00, G01P 15/08, H04R 17/02

(54) **INDUSTRIELLE FÖRDERANLAGE SOWIE VERFAHREN ZUR ERFASSUNG DES ZUSTANDS EINER SCHIENE EINER INDUSTRIELLEN FÖRDERANLAGE**

(30) Priorität: 23.12.2020 DE 102020134909
(71) Anmelder: pentanova cs GmbH, 71032 Böblingen (DE)
(72) Erfinder: Kirchner, Marc Walter, 69245 Bammental (DE); Wäder, Martin, 71093 Weil im Schönbuch (DE); Buckstegge, Felix, 71154 Nufringen (DE)
(74) Vertreter: Ostertag & Partner Patentanwälte mbB

(57) **Zusammenfassung**

Die Erfindung betrifft eine industrielle Förderanlage, mit einer Schiene, zumindest einer Fahreinheit, die zumindest ein elektronisch angetriebenes Fahrwerk, mit dem die Fahreinheit entlang der Schiene verfahrbar ist, einen Beschleunigungssensor und eine Auswerteeinheit aufweist, wobei mit Hilfe des Beschleunigungssensors Beschleunigungskomponenten mindestens eines Fahrwerks der Fahreinheit senkrecht zur Fahrrichtung zur Erfassung des Zustands der Schiene erfassbar sind, wobei der Beschleunigungssensor einen Schwingungssensor mit einer Piezokeramik zur Erzeugung eines hochimpedanten Ladungssignals in Abhängigkeit von einer Schwingbeschleunigung sowie eine Impedanzwandlerschaltung zur Wandlung des hochimpedanten Ladungssignals in ein niederimpedantes Spannungssignal aufweist, und wobei die Auswerteeinheit dazu ausgelegt ist, das niederimpedante Spannungssignal der Impedanzwandlerschaltung der Beschleunigungssensorik zu empfangen und zu Beschleunigungssignalen verarbeiten.

Des Weiteren betrifft die Erfindung ein Verfahren zur Erfassung des Zustands einer Schiene einer industriellen Förderanlage.

## Beschreibung

### HINTERGRUND DER ERFINDUNG

### 1. Gebiet der Erfindung

Die Erfindung betrifft eine industrielle Förderanlage, mit einer Schiene und zumindest einer Fahreinheit, die zumindest ein elektronisch angetriebenes Fahrwerk aufweist, mit dem die Fahreinheit entlang der Schiene verfahrbar ist.

Des Weiteren betrifft die Erfindung ein Verfahren zur Erfassung des Zustands einer Schiene einer solchen industriellen Förderanlage.

### 2. Beschreibung des Standes der Technik

Bei schienengebunden industriellen Förderanlagen wie beispielsweise Elektro-Hängebahnen oder Bodenbahnen werden häufig Fahreinheiten wie Fahrzeuge, Skids oder Gehänge eingesetzt, die aus konstruktiven Gründen oder aufgrund hoher Traglasten nahezu ungefederte Fahrwerke aufweisen. Infolgedessen werden an die Beschaffenheit der Schiene, die ein- oder mehrspurig sein kann, erhöhte Anforderungen gestellt. Dies gilt umso mehr, je höher die Fahrgeschwindigkeit oder/und das Gewicht der Fahreinheit sind.

Insbesondere sind Unebenheiten entlang der regulären Fahrstrecke der Schiene oder an Weichen wie ein außerhalb der zulässigen Toleranz liegender Höhen- oder Seitenversatz oder ein unzulässig großer Dehnstoß unerwünscht. Solche Unebenheiten oder unzulässig große Stöße führen zu impulsartigen Belastungen der Mechanik oder der Steuerungstechnik und können zu Schäden an Stromabnehmern, Lauf- oder/und Führungsrollen oder sogar an dem mitgeführten Ladegut führen. In Reaktion darauf kann die Schiene selbst beschädigt werden.

Nachdem sich die Verhältnisse entlang der Schiene beispielsweise an den genannten Dehnstößen aufgrund von Temperaturschwankungen ständig ändern können, ist eine fortgesetzte Überwachung des Zustands der Schiene entlang der Fahrstrecke wünschenswert, da die indirekten Kosten eines ungeplanten Stillstands einer solchen Förderanlage die direkten Kosten einer Wartung oder Reparatur beträchtlich übersteigen können. So kann beispielsweise der ungeplante Stillstand der Förderanlage in einem kritischen Fertigungsprozess wie beispielsweise einer Temperaturbehandlung eines Werkstücks zu einer nachhaltigen Schädigung des Werkstücks führen.

### ZUSAMMENFASSUNG DER ERFINDUNG

Es ist eine Aufgabe der Erfindung, eine industrielle Förderanlage sowie ein Verfahren zur Erfassung des Zustand einer Schiene einer solchen Förderanlage anzugeben, die/das eine Überwachung der Schiene fortgesetzt im Betrieb ermöglicht.

Die Aufgabe wird durch eine industrielle Förderanlage nach Anspruch 1 gelöst. Eine solche Förderanlage weist eine Schiene und zumindest eine Fahreinheit auf, die zumindest ein elektronisch angetriebenes Fahrwerk aufweist, mit dem die Fahreinheit entlang der Schiene verfahrbar ist. Des Weiteren weist die Förderanlage einen Beschleunigungssensor und eine Auswerteeinheit auf. Mit Hilfe des Beschleunigungssensors sind Beschleunigungskomponenten mindestens eines Fahrwerks der Fahreinheit senkrecht zur Fahrrichtung zur Erfassung des Zustands der Schiene erfassbar.

Erfindungsgemäß ist vorgesehen, dass der Beschleunigungssensor einen Beschleunigungssensor wie beispielsweise einen Schwingungssensor mit einer Piezokeramik zur Erzeugung eines hochimpedanten Ladungssignals in Abhängigkeit von einer Beschleunigung wie beispielsweise einer Schwingbeschleunigung sowie eine Impedanzwandlerschaltung zur Wandlung des hochimpedanten Ladungssignals in ein niederimpedantes Spannungssignal aufweist. Die Auswerteeinheit ist dazu ausgelegt, das niederimpedante Spannungssignal der Impedanzwandlerschaltung zu empfangen und zu Beschleunigungssignalen zu verarbeiten.

Es hat sich herausgestellt, dass die in einem industriellen Umfeld wie einer industriellen Förderanlage auftretenden elektromagnetischen Störungen schwer zu beherrschen sind. So werden beispielsweise für die Ansteuerung des elektrischen Antriebs Frequenzumrichter eingesetzt werden, die eine starke Quelle für elektromagnetische Störstrahlung darstellen. Diese behindert die Übertragung von Messsignalen von einem herkömmlichen Beschleunigungssensor derart, dass das Messsignal nicht oder kaum auswertbar ist. Erst die erfindungsgemäße Kombination aus einem piezobasierten Beschleunigungssensor, der ein hochimpedantes Ladungssignal erzeugt, einer Impedanzwandlung des Ladungssignals in ein niederimpedantes Spannungssignal und das Anordnen der Auswerteeinheit an der Fahreinheit ermöglichen eine zuverlässige Erfassung der von dem Beschleunigungssensor erzeugten Beschleunigungssignale.

Bei einer bevorzugten Ausführung liegen die von dem Beschleunigungssensor erfassten Schwingungen/Beschleunigungen im kHz-Bereich.

In diesem Zusammenhang kann vorgesehen sein, dass die Auswerteeinheit bei der Erzeugung der Beschleunigungssignale die empfangenen Spannungssignale einer Bandpassfilterung unterzieht. Dies ermöglicht es, die speziell bei Unebenheiten im Schienenverlauf auftretenden impulsartigen Beschleunigungen zu erfassen und gleichzeitig andere Störsignale, die beispielsweise von Eigenmodenschwingungen eines Gehäuses der Fahreinheit herrühren Iönnen, bei Beladungs- und Entladungsvorgängen einer Fahreinheit auftreten oder durch normale Fahrbeschleunigungen hervorgerufen werden können, auszufiltern.

Hierbei ist es von Vorteil, wenn der Beschleunigungssensor so relativ zu dem Fahrwerk angeordnet ist, dass eine mechanisch steife Verbindung zwischen dem Beschleunigungssensor und dem Fahrwerk besteht. Dies ist insbesondere hilfreich, um von Anbauten oder Lasten hervorgerufene Beschleunigungen von den Beschleunigungen zu unterscheiden, die von dem Fahrwerk aufgrund von Unebenheiten hervorgerufen werden können.

Besonders vorteilhaft ist es, wenn zumindest zwei Beschleunigungssensoren für ein Fahrwerk vorgesehen sind, wobei die Beschleunigungssensoren so angeordnet sind, dass Beschleunigungen in einer ersten Richtung senkrecht zur Fahrrichtung und in einer zweiten Richtung senkrecht zur Fahrrichtung erfassbar sind. Dies ermöglicht die Unterscheidung beispielsweise von Beschleunigungen, die von Lastrollen beispielsweise bei einem Dehnstoß hervorgerufen werden, von Beschleunigungen, die bei einem seitlichen Versatz auftreten und beispielsweise von Führungsrollen bewirkt werden.

Ebenfalls vorteilhaft ist es, wenn die Auswerteeinheit dazu ausgelegt ist, eine Korrelation der Fahrposition des Fahrwerks bezüglich der Schiene und den Beschleunigungssignalen herzustellen. Hierbei können bekannte Systeme zur Erfassung der Position entlang der Schiene eingesetzt werden. Mithilfe der Korrelation zwischen der Schienenposition und den Beschleunigungssignalen kann so die genaue Position einer unzulässigen Toleranz entlang der Fahrstrecke ermittelt werden. Dabei kann beispielsweise berücksichtig werden, ob eine gleiche Beschleunigungssignalsignatur entlang der Schiene an einer gleichen Position entlang der Schiene erzeugt wird. Ist dies der Fall und zeigt die Beschleunigungssignatur eine unzulässige Toleranz an, so kann dies an eine zentrale Anlagensteuerung weitergeleitet werden. Die Anlagensteuerung kann dann entscheiden, welche Maßnahmen eingeleitet werden. Beispielsweise kann die Fahrgeschwindigkeit an der betreffenden Stelle verringert werden, die Befahrhäufigkeit der Stelle verringert werden oder die Stelle nur noch mit geringerer Beladung passiert werden. Gleichzeit kann eine Inspektion oder Reparatur der betreffenden Schienenstelle eingeleitet werden.

Die Aufgabe wird auch durch ein erfindungsgemäßes Verfahren zur Erfassung des Zustands einer Schiene einer industriellen Förderanlage gelöst. Das Verfahren ist auf eine Förderanlage anwendbar, die eine Schiene und mehrere Fahreinheiten aufweist, die zumindest ein angetriebenes Fahrwerk und zumindest ein Fahrwerk mit zumindest einem Beschleunigungssensor zur Erfassung von Beschleunigungskomponenten aufweisen, und umfasst die Schritte: mittels eines piezoelektrischen Schwingungssensors des Beschleunigungssensors - Erfassen einer Beschleunigungskomponente eines Fahrwerks senkrecht zur Fahrrichtung und Erzeugen eines hochimpedanten Ladungssignals; Wandeln des hochimpedanten Ladungssignal in ein Spannungssignal mit niedriger Impedanz; Leiten des Spannungssignals als Beschleunigungssignal von dem Beschleunigungssensor zu einer Auswerteeinheit an der Fahreinheit.

Auf diese Weise sind die Vorteile der erfindungsgemäßen industriellen Förderanlage auch im Rahmen eines Verfahrens realisierbar.

In vorteilhafter Weise wird das Beschleunigungssignal einer Bandpassfilterung unterzogen.

Es ist ebenfalls von Vorteil, wenn die Beschleunigungskomponenten in einer ersten Richtung senkrecht zu der Fahrrichtung und in einer zweiten, von der ersten Richtung verschiedenen, Richtung senkrecht zu der Fahrrichtung erfasst werden.

Bevorzugt wird bei der Auswertung eine Korrelation zwischen der Fahrposition des Fahrwerks bezüglich der Schiene und dem Beschleunigungssignal herstellt.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: in einer ersten perspektivischen Ansicht eine Ausführungsform einer industriellen Förderanlage;
- Figur 2: die Förderanlage der Figur 1 in einer zweiten perspektivischen Ansicht;
- Figur 3: die Förderanlage der Figuren 1 und 2 in einer Seitenansicht;
- Figur 4: die Förderanlage der Figuren 1-3 in einer Rückansicht; und
- Figur 5: ein schematischer Schaltplan von Beschleunigungssensor, Messeinheit und Auswerteeinheit.

### BESCHREIBUNG BEVORZUGTER AUSFÜHRUNGSBEISPIELE

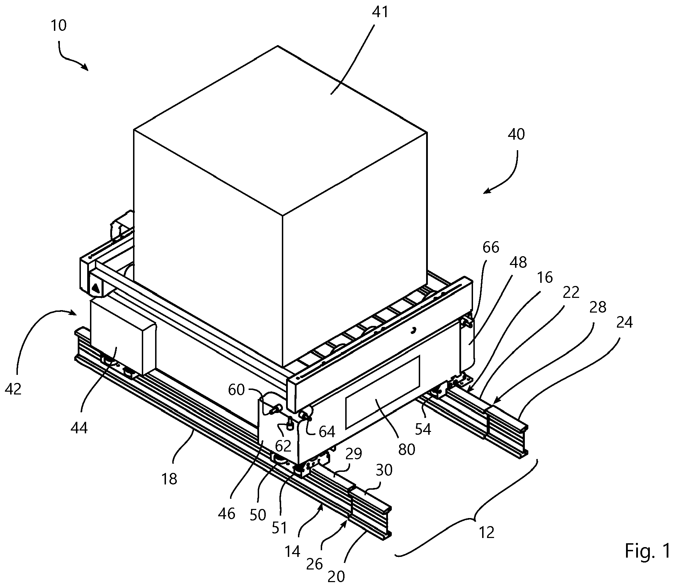

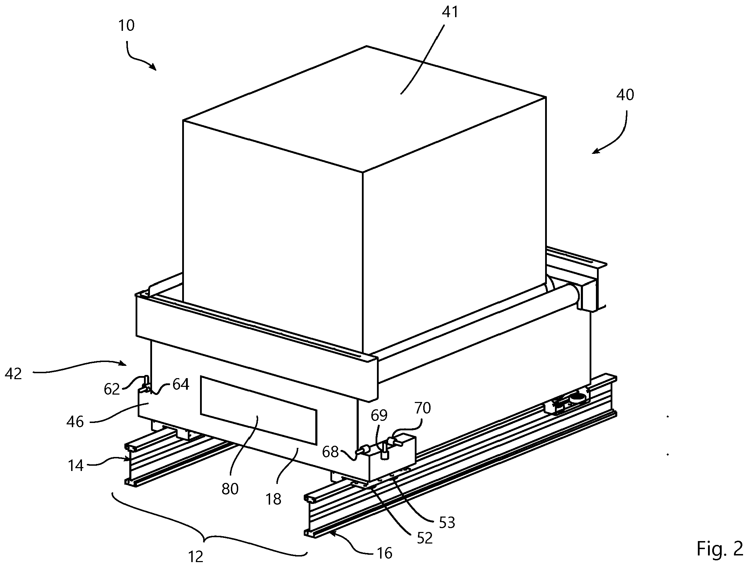

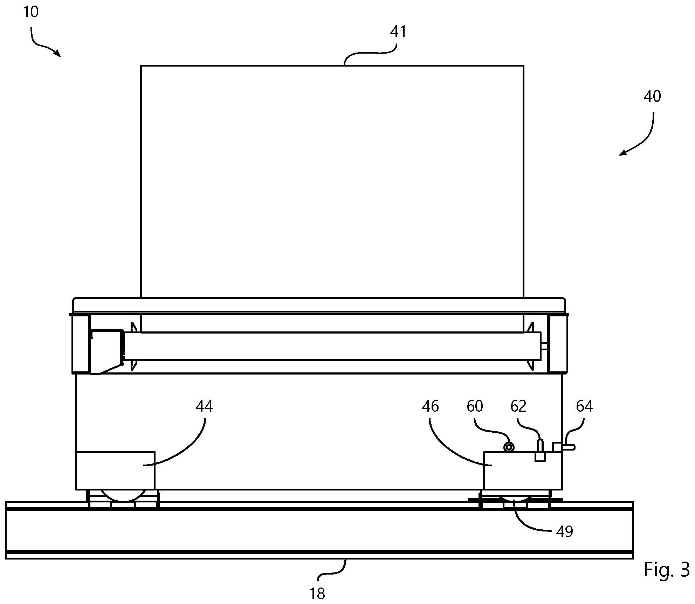

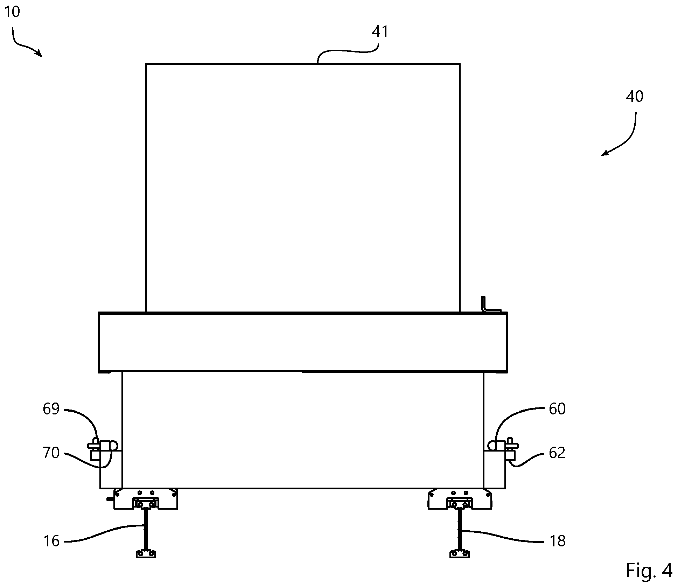

Die Figuren 1 und 2 veranschaulichen in perspektivischen schematischen Darstellungen, die Figuren 3 und 4 in einer Seit- und einer Rückansicht, eine Ausführungsform einer erfindungsgemäßen industriellen Förderanlage 10. Die Förderanlage 10 umfasst ein hier nur schematisch angedeutetes Schienenpaar 12 mit einer ersten, in der Figur 1 vorderen, Schiene 14 und einer zweiten, in der Figur 1 hinteren, Schiene 16. Die vordere und die hintere Schiene 14, 16 weisen in dem gezeigten Ausführungsbeispiel jeweils zwei Schienenstücke 18, 20 bzw. 22, 24 auf, die jeweils an einem Stoß 26, 28 aneinander stoßen.

Bei dem Stoß 26 der vorderen Schiene 14 ist ein Höhenversatz erkennbar, d.h. die Lauffläche 29 des ersten Schienenstücks 18 befindet sich nicht auf der gleichen Höhe wie die Lauffläche 30 des zweiten Schienenstücks 20. Dieser Höhenversatz ist hier in der Höhe zu Veranschaulichungszwecken lediglich beispielhaft dargestellt. Je nach Anforderungsprofil der Förderanlage 10 können bereits wesentlich kleinere Dimensionen des Höhenversatzes problematisch sein.

Bei dem Stoß 28 der hinteren Schiene 16 sind die Laufflächen auf einer Höhe, allerdings weisen sie einen lateralen, seitlichen Versatz auf. Ein solcher Versatz ist in erster Linie für Führungsrollen schädlich, kann aber auch einen negativen Einfluss auf Lastrollen haben. Auch hier ist die Darstellung beispielhaft und es kann in der Realität die Größe des Versatzes bereits bei wesentlich kleineren Versatzdimensionen problematisch sein.

Neben den dargestellten Versatzgeometrien (Höhenversatz und seitlicher Versatz) kann es selbstverständlich auch kombinierte Situationen geben, die eine beliebige Überlagerung der beiden Geometrien darstellen. Zusätzlich oder alternativ besteht in der Regel bei mehrstückigen Schienen ein Dehnstoß, der ebenfalls bei Überschreiten einer zulässigen Toleranz erkannt und beseitigt werden muss. Des Weiteren ist die Problematik auch bei Stromabnehmern relevant, die mittels einer schleifenden Berührung, in der Regel seitlich an der Schien, auf einen permanenten mechanischen Kontakt angewiesen sind.

Die Schiene 12 wird bei dem dargestellten Ausführungsbeispiel von einer Fahreinheit 40 befahren. Die Fahreinheit 40 ist in dem gezeigten Ausführungsbeispiel eine Elektro-Bodenbahn, ist mit einer Last 41 beladen und weist ein Fahrwerk 42 auf. Das Fahrwerk 42 umfasst vier lastabtragende Laufeinheiten, von denen in der Figur 1 drei Laufeinheiten 44, 46, 48 erkennbar sind. Die Laufeinheiten 44, 46, 48 sind paarweise an der Vorder- und Rückseite bezüglich der Fahrrichtung der Fahreinheit 40 angeordnet. Jede Laufeinheit umfasst eine Lastrolle - beispielsweise die Lastrolle 49 der Fahreinheit 46, erkennbar in Figur 3 -, die auf der Lauffläche der jeweiligen Schiene 14, 16, (zum Beispiel auf den Laufflächen 29, 30 der vorderen Schiene 14) abrollen. Bei dem in Figur 1 veranschaulichten Ausführungsbeispiel sind die Lastrollen der Fahrwerke 46, 48 angetrieben. Selbstverständlich können auch mehr oder weniger Lastrollen einer Fahreinheit angetrieben sein.

Auch wenn das Ausführungsbeispiel eine Bodenbahn ist, kann die Erfindung dem Grunde nach auch auf Elektrohängebahnen oder andere ähnliche industrielle Förderanlagen angewendet werden.

Jede Laufeinheit 44-48 umfasst einen Satz Führungsrollen, die sich seitlich an der Lauffläche der Schiene 14, 16 im Kopfbereich abstützen. Beispielhaft sind in Figur 1 die äußeren Führungsrollen 50, 51 der Laufeinheit 46, in Figur 2 die Führungsrollen 52, 53 der Laufeinheit 48 dargestellt und bezeichnet. Es sind in der gezeigten Ausführungsform auch innere Führungsrollen vorhanden, von denen lediglich eine innere Führungsrolle 54 der Laufeinheit 48 erkennbar ist.

Bei dem in Figur 1 gezeigten Ausführungsbeispiel sind Beschleunigungssensoren an den vorderen Laufeinheiten 46, 48 angeordnet. Beispielhaft sind an der Laufeinheit 46 drei Beschleunigungssensoren 60, 62, 64 angeordnet. Die Darstellung ist an dieser Stelle stark schematisch und soll vor allem den prinzipiellen Anbringungsort und die jeweilige Ausrichtung der Sensoren veranschaulichen. Konstruktiv sind die Sensoren so an der jeweligen Laufeinheit angebracht, dass mechanische Stöße oder andere Bewegungen ohne zusätzliche Relativbewegungen an die Sensoren übertragen werden. Dies ist insbesondere vor Relevanz, um hohe Übertragungsfrequenzen zu erfassen, wie sie bei den erwähnten Dehnstößen oder Versatzgeometrien während des Über- oder Vorbeifahrens erzeugt werden und um das Entstehen von Eigenfrequenzen zu verhindern.

In der vorliegend gezeigten Ausführungsform sind die Sensoren 60-64 in alle drei Raumrichtungen ausgerichtet und können so prinzipiell jede entstehende Beschleunigung erfassen und der entsprechenden Raumrichtung zuordnen. Von besonderer Relevanz sind dabei die Sensoren, die senkrecht zu der Schienenausrichtung und damit auch der Fahrrichtung angeordnet sind. Bei dem in Figur 1 gezeigten Ausführungsbeispiel ist dies der Sensor 62, der in vertikaler Richtung und damit senkrecht zu der Lauffläche der Schiene 14 arbeitet, sowie der Sensor 60, der in horizontaler Richtung und damit senkrecht zu den seitlichen Anlageflächen arbeitet, an denen unter anderem die Führungsrollen 50, 51 anliegen.

Der Sensor 64, der ebenfalls in horizontaler Richtung arbeitet, aber parallel zu der Fahrtrichtung angeordnet ist, erfasst in erster Linie Beschleunigungen in Fahrtrichtung und kann beispielsweise dazu dienen, die Beschleunigungen der anderen Sensoren 60, 62 einer bestimmten Fahrsituation wie beispielsweise der Fahrgeschwindigkeit oder gefahrenen Fahrstrecke zuzuordnen und so die Auswertung zu verbessern.

Neben den eben beschriebenen Sensoren 60-64 ist in Figur 1 ein weiterer Sensor 66 gezeigt, der zu dem Satz an Sensoren gehört, die zu der zweiten hinteren Schiene 16 gehören. In Figur 2 ist der komplette Satz Sensoren 68-70 der Laufeinheit 48 dargestellt. Auf diese Weise kann jede Schiene 12, 14 separat erfasst und beurteilt werden.

Alle Sensoren 60-70 der Fahreinheit 40 sind mit einer Auswerteinheit 80 verbunden. Diese ist in der Figur 2 symbolisch dargestellt und kann sich an einer geeigneten Stelle innerhalb oder an der Fahreinheit 40 befinden. Die Auswerteeinheit 80 kann mit einer zentralen Anlagensteuerung (nicht abgebildet) in Verbindung stehen.

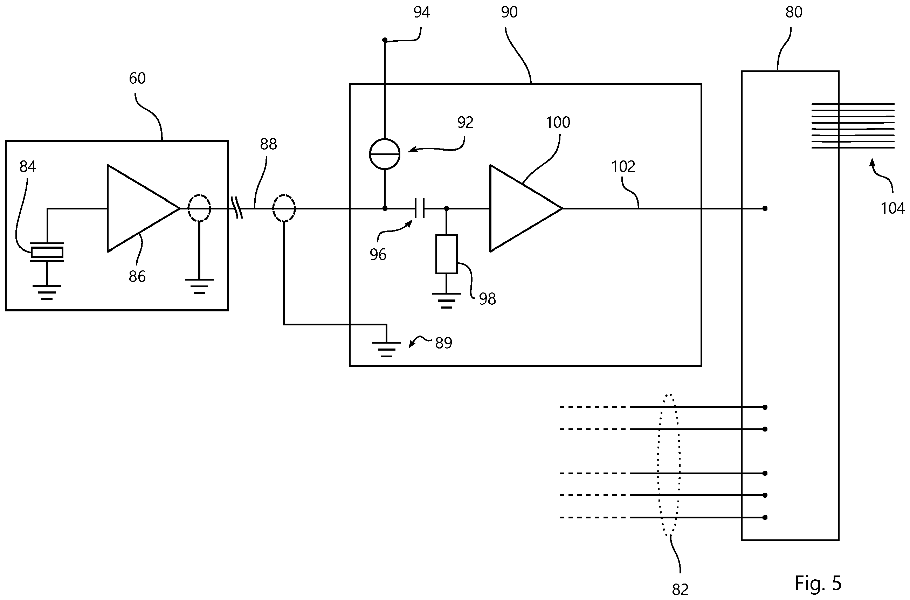

Die Funktionalität der Sensoren 60-70 und deren Zusammenspiel mit der Auswerteeinheit 80 ist in Figur 5 dargestellt. Die Auswerteeinheit 80 ist gemäß dem in Figur 5 dargestellten Schema mit den Sensoren der Fahreinheit 40 verbunden. Es ist die elektrische Anordnung für einen Sensor, hier den Sensor 60, im Detail dargestellt. Die Verbindungen zu den anderen möglicherweise vorhandenen Sensoren sind lediglich schematisch durch die Verbindungen 82 veranschaulicht.

Die Beschleunigungssensoren 60-70 der Fahreinheit 40 sind piezobasiert. Wie beispielhaft für den Sensor 60 veranschaulicht ist, weist der Beschleunigungssensor 60 eine Piezokeramik 84 auf. Die Piezokeramik 84 erzeugt bei Schwingbeschleunigungen ein hochimpedante Ladungssignal. Dieses Ladungssignal wird mittels einer Impedanzwandlerschaltung 86 in ein niederimpedantes Spannungssignal umgewandelt. Dieses Spannungssignal kann nun beispielsweise über ein Koaxialkabel 88, das gleichzeitig eine Stromversorgung für die Impedanzwandlerschaltung 86 zur Verfügung stellen kann, zu einer Messeinheit 90 weitergeleitet werden. Das Koaxialkabel kann beispielsweise über die Messeinheit 90 auf Masse 89 liegen.

Die Messeinheit 90 umfasst gemäß der in der Figur 5 gezeigten Ausführungsform eine Konstantstromquelle 92, die der Impedanzwandlerschaltung 86 und der Piezokeramik 84 den benötigten Strom zur Verfügung stellt. Die Konstantstromquelle 92 kann beispielsweise über eine Versorgungsspannung 94 mit Energie versorgt werden, die beispielsweise aus dem Bordnetz der Fahreinheit 40 stammen kann. Des Weiteren umfasst die Messeinheit 90 einen Koppelkondensator 96, der den Konstantstrom auskoppelt und nur das Spannungssignal der Piezokeramik 84 weiterleitet. Die Messeinheit 90 weist einen Eingangswiderstand 98 auf, der an die Impedanz des Beschleunigungssensors 60 angepasst ist.

Nach einer entsprechenden Verstärkung 100 wird das Messsignal über eine Leitung an die Auswerteeinheit 80 weitergeleitet. Die in Figur 5 dargestellte Trennung von Messeinheit 90 und Auswerteeinheit 80 ist willkürlich; selbstverständlich können die Messeinheit 90 und die Auswerteeinheit 80 auch als eine Auswerteeinheit 80 ausgestaltet sein.

Die Auswerteeinheit 80 kann nun auf Basis der an sie gelieferten Messsignale der verschiedenen Sensoren eine Auswertung vornehmen. Dabei kann die Auswerteeinheit neben den Beschleunigungssensoren 60-70 auch auf andere Sensoriken oder Informationen wie beispielsweise einer Position der Fahreinheit 40 oder der Fahrwerke 46, 48 entlang der Schiene 14, 16 zurückgreifen. Es auch zusätzlich ein anlagenweites oder ein lokal in der Fahreinheit 40 befindliches Bussystem 104 vorgesehen sein, das der Auswerteeinheit 80 Informationen bereitstellen kann oder an das die Auswerteeinheit Informationen liefern kann.

Die Auswerteeinheit 80 kann beispielsweise die Messignale einer Fouriertransformation unterziehen und anschließend eine geeignete Bandpassfilterung vornehmen, um eine Einschränkung auf ein Frequenzband vorzunehmen, das für die Erkennung und Auswertung von Informationen, die einen Schienenzustand betreffen, besonders relevant erscheint.

Anhand dieser Informationen kann die Auswerteeinheit 80 Daten über den Zustand der Schienen 14, 16 erfassen. Diese Daten kann die Auswerteeinheit 80 beispielsweise an das Bussystem 104 übermitteln, das beispielsweise mit einer zentralen Anlagensteuerung verbunden ist. Daraus können Prognosen über ein mögliches Ausfallrisiko und eine geeignete Servicestrategie abgeleitet werden.

Neben der Erfassung von Schädigungen der Schienenübergänge kann auch eine Fahrzeugbeschädigung durch eine äußere Einwirkung wie beispielsweise bei einem Unfall ermittelt werden.

## Patentansprüche

1. Industrielle Förderanlage (10), mit
a) einer Schiene (14),
b) zumindest einer Fahreinheit (40), die
c) zumindest ein elektronisch angetriebenes Fahrwerk (46), mit dem die Fahreinheit (40) entlang der Schiene (14) verfahrbar ist,
d) einen Beschleunigungssensor (60) und eine Auswerteeinheit (80) aufweist, wobei
e) mit Hilfe des Beschleunigungssensors (60) Beschleunigungskomponenten mindestens eines Fahrwerks (46) der Fahreinheit (40) senkrecht zur Fahrrichtung zur Erfassung des Zustands der Schiene (14) erfassbar sind, wobei der Beschleunigungssensor (60)
- eine Piezokeramik (84) zur Erzeugung eines hochimpedanten Ladungssignals in Abhängigkeit von einer Beschleunigung sowie
- eine Impedanzwandlerschaltung (86) zur Wandlung des hochimpedanten Ladungssignals in ein niederimpedantes Spannungssignal aufweist, und wobei
f) die Auswerteeinheit (80) dazu ausgelegt ist, das niederimpedante Spannungssignal der Impedanzwandlerschaltung (86) des Beschleunigungssensors (60) zu empfangen und zu Beschleunigungssignalen verarbeiten.

2. Förderanlage nach Anspruch 1, wobei die von dem Beschleunigungssensor (60) erfassten Schwingungen im kHz-Bereich liegen.

3. Förderanlage nach einem der vorhergehenden Ansprüche, wobei die Auswerteeinheit (80) bei der Erzeugung der Beschleunigungssignale die empfangenen Spannungssignale einer Bandpassfilterung unterzieht.

4. Förderanlage nach einem der vorhergehenden Ansprüche, wobei der Beschleunigungssensor (60) so relativ zu dem Fahrwerk (46) angeordnet ist, dass eine mechanisch steife Verbindung zu dem Fahrwerk (46) besteht.

5. Förderanlage nach einem der vorhergehenden Ansprüche, wobei zumindest zwei Beschleunigungssensoren (60, 62) für ein Fahrwerk (46) vorgesehen sind, wobei die Beschleunigungssensoren (60, 62) so angeordnet sind, dass Beschleunigungen in einer ersten Richtung senkrecht zur Fahrrichtung und in einer zweiten Richtung senkrecht zur Fahrrichtung erfassbar sind.

6. Förderanlage nach einem der vorhergehenden Ansprüche, wobei die Auswerteeinheit (80) dazu ausgelegt ist, eine Korrelation der Fahrposition des Fahrwerks (46) bezüglich der Schiene (14) und den Beschleunigungssignalen herzustellen.

7. Verfahren zur Erfassung des Zustands einer Schiene (14) einer industriellen Förderanlage (10), wobei die Förderanlage (10) eine Schiene (14) und mehrere Fahreinheiten (40) aufweist, die zumindest ein angetriebenes Fahrwerk (46) und zumindest ein Fahrwerk (46) mit zumindest einem Beschleunigungssensor (60) zur Erfassung von Beschleunigungskomponenten aufweisen, mit den Schritten:
a) mittels eines piezoelektrischen Sensors (84) des Beschleunigungssensors (60) - Erfassen einer Beschleunigungskomponente eines Fahrwerks (46) senkrecht zur Fahrrichtung und Erzeugen eines hochimpedanten Ladungssignals;
b) Wandeln - mittels einer Impedanzwandlerschaltung (86) des Beschleunigungssensors (60) - des hochimpedanten Ladungssignal in ein Spannungssignal mit niedriger Impedanz;
c) Leiten des Spannungssignals als Beschleunigungssignal von dem Beschleunigungssensor (60) zu einer Auswerteeinheit (80) an der Fahreinheit (40).

8. Verfahren nach Anspruch 7, wobei das Beschleunigungssignal bei einer Auswertung in der Auswerteeinheit einer Bandpassfilterung unterzogen wird.

9. Verfahren nach einem der Ansprüche 7 oder 8, wobei die Beschleunigungskomponenten in einer ersten Richtung senkrecht zu der Fahrrichtung und in einer zweiten, von der ersten Richtung verschiedenen, Richtung senkrecht zu der Fahrrichtung erfasst werden.

10. Verfahren nach einem der Ansprüche 7 bis 9, wobei bei der Auswertung eine Korrelation zwischen der Fahrposition des Fahrwerks (46) bezüglich der Schiene (14) und dem Beschleunigungssignal hergestellt wird.
